# FASCICULE DE BREVET EUROPEEN

(11) **EP 1 665 573 B1**
(45) Date de publication et mention de la délivrance du brevet: **09.01.2008**
(21) Numéro de dépôt: 04787371.6
(22) Date de dépôt: 14.09.2004
(51) Int. Cl.: H04B 5/00, G06K 7/00, G06K 19/00

(54) **OBJET PORTATIF A DEMODULATION MULTINIVEAUX, COUPLE INDUCTIVEMENT A UNE STATION FIXE**
TRAGBARES OBJEKT MIT MEHREBENEN-DEMODULATION, DAS INDUKTIV AN EINE FESTSTATION ANGEKOPPELT IST
PORTABLE OBJECT HAVING MULTI-LEVEL DEMODULATION AND BEING INDUCTIVELY COUPLED TO A FIXED STATION

(30) Priorité: 17.09.2003 FR 0310928
(43) Date de publication de la demande: 07.06.2006
(73) Titulaire: COMMISSARIAT A L'ENERGIE ATOMIQUE, 75752 Paris Cédex 15 (FR)
(72) Inventeur: VILLARD, Patrick, F-38100 Grenoble (FR); DELORME, Nicolas, F-38000 Grenoble (FR); CONDEMINE, Cyril, F-38140 IZEAUX (FR)
(74) Mandataire: Jouvray, Marie-Andrée
(86) Numéro de dépôt international: PCT/FR2004/002325
(87) Numéro de publication internationale: WO 2005/029726

(56) Documents cités:
- WO-A-00/03352
- WO-A-00/63830
- US-A- 6 028 503
- DA FONTE DIAS V: "Sigma-delta signal processing" CIRCUITS AND SYSTEMS, 1994. ISCAS '94., 1994 IEEE INTERNATIONAL SYMPOSIUM ON LONDON, UK 30 MAY-2 JUNE 1994, NEW YORK, NY, USA,IEEE, US, 30 mai 1994 (1994-05-30), pages 421-424, XP010143415 ISBN: 0-7803-1915-X
- TUTTLE J R: "Traditional and emerging technologies and applications in the radio frequency identification (RFID) industry" RADIO FREQUENCY INTEGRATED CIRCUITS (RFIC) SYMPOSIUM, 1997., IEEE DENVER, CO, USA 8-11 JUNE 1997, NEW YORK, NY, USA,IEEE, US, 8 juin 1997 (1997-06-08), pages 5-8, XP010231169 ISBN: 0-7803-4063-9
- RIBNER D B: "A COMPARISON OF MODULATOR NETWORKS FOR HIGH-ORDER OVERSAMPLED SIGMA DELTA ANALOG-TO-DIGITAL CONVERTERS" IEEE TRANSACTIONS ON CIRCUITS AND SYSTEMS, IEEE INC. NEW YORK, US, vol. 38, no. 2, 1 février 1991 (1991-02-01), pages 145-159, XP000224212

## Description

### Domaine technique de l'invention

L'invention concerne un objet portatif muni d'une antenne couplée inductivement à une station fixe d'un dispositif de télétransmission, l'objet portatif comportant une impédance de charge variable, connectée aux bornes de l'antenne, et une boucle de régulation de la tension aux bornes de l'impédance de charge comportant des moyens de redressement de la tension aux bornes de l'antenne et des moyens de commande destinés à modifier l'impédance de charge en fonction de la tension de sortie des moyens de redressement.

### État de la technique

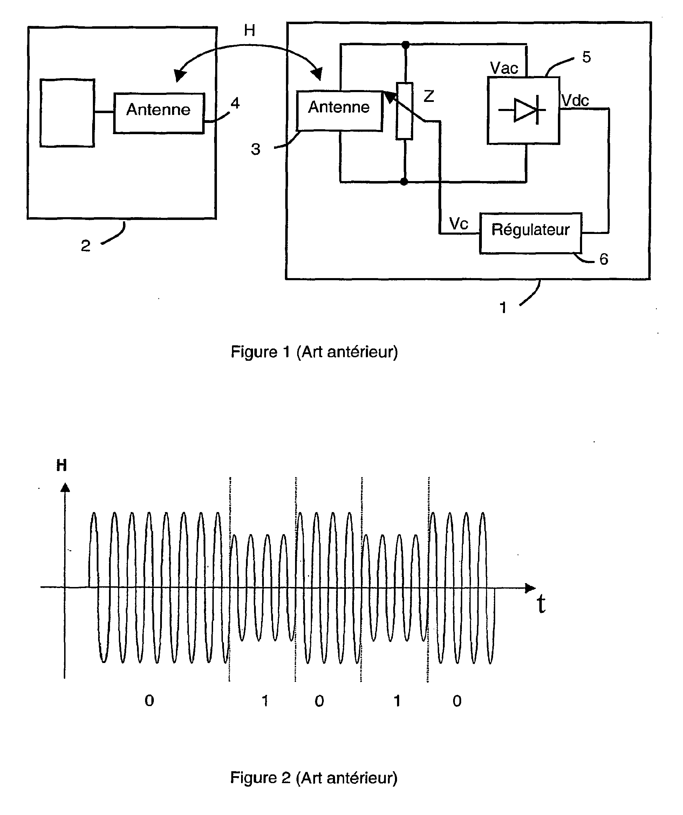

Comme représenté à la figure 1, le couplage inductif est classiquement utilisé pour la télétransmission de données entre un objet portatif 1, notamment du type carte, billet, étiquette sans contact, connue sous le nom d'étiquette RFID ("radiofrequency identification"), etc., et une station fixe 2, par exemple constituée par un lecteur de cartes, un interrogateur d'étiquettes, etc., dans le domaine de l'identification d'objets, du contrôle d'accès, du télépéage, etc.

Le document WO-A-00/63830 décrit une station fixe couplée à une étiquette RFID passive, standard, à impédance de charge variable.

Dans la plupart des dispositifs de télétransmission de ce type, l'objet portatif 1 est passif. Il est télé-alimenté par la station fixe 2, qui comporte son propre circuit d'alimentation en énergie, par l'intermédiaire du couplage inductif qui est réalisé par des antennes 3 et 4, constituées par des bobinages. Ces dispositifs utilisent généralement le principe de la modulation de charge.

La transmission de données binaires de la station fixe 2 vers l'objet portatif 1 se fait classiquement, notamment dans le document WO-A-00/03352, par modulation d'amplitude binaire ("amplitude shift keying" ou ASK). Comme représenté à la figure 2, l'amplitude du champ magnétique H émis par la station fixe 2 et reçu par l'objet portatif 1 prend une première valeur lorsque le signal de données à transmettre prend la valeur binaire 0 et une seconde valeur, inférieure à la première sur la figure 2, lorsque le signal de données à transmettre prend la valeur binaire 1.

L'antenne 3 de l'objet portatif 1 est le siège d'une force électromotrice, qui crée aux bornes de l'antenne 3 une tension alternative Vac dont l'amplitude dépend, entre autres, du champ magnétique émis par la station fixe, de l'impédance de charge Z connectée en parallèle sur l'antenne 3 et de la distance entre l'objet portatif et la station fixe. Pour détecter cette amplitude, ainsi que pour permettre la télé-alimentation de l'objet portatif 1, celui-ci comporte comme représenté à la figure 1, un circuit de redressement 5, connecté à la sortie de l'antenne 3. Une tension continue Vdc, dont l'amplitude est représentative des données transmises, est donc produite à la sortie du circuit de redressement 5, à partir de la tension aux bornes du bobinage d'antenne 3, induite par le champ magnétique émis par le lecteur 2.

Le circuit de redressement 5 peut être constitué par tout circuit approprié permettant de transformer une tension alternative Vac en une tension continue Vdc. Il peut, par exemple, être constitué par un des circuits représenté aux figures 3 à 6 et comportant classiquement, respectivement, une diode (figure 3), un pont de diodes (figure 4) ou des circuits de redressement mono-alternance (figure 5) ou bi-alternance (figure 6) utilisant des transistors de type MOS.

Le champ magnétique vu par l'objet portatif 1 varie rapidement avec la distance séparant l'objet portatif du lecteur 2. La force électromotrice induite dans l'antenne 3 de l'objet portatif 1 peut ainsi varier dans de grandes proportions. L'objet portatif 1 étant essentiellement constitué par un circuit intégré connecté à l'antenne 3, ce circuit est généralement protégé par des moyens de limitation de la tension aux bornes de l'antenne, ce qui permet d'utiliser des technologies basse tension standard, moins coûteuses que les technologies haute tension. Il est connu d'utiliser pour cela un circuit de régulation de type shunt, dont le principe est illustré à la figure 1. Le circuit de régulation de la figure 1 comporte un régulateur 6 connecté à la sortie du circuit de redressement 5 et contrôlant la valeur de l'impédance de charge Z, connectée aux bornes de l'antenne 3, en fonction de la tension continue Vdc de sortie du circuit de redressement 5.

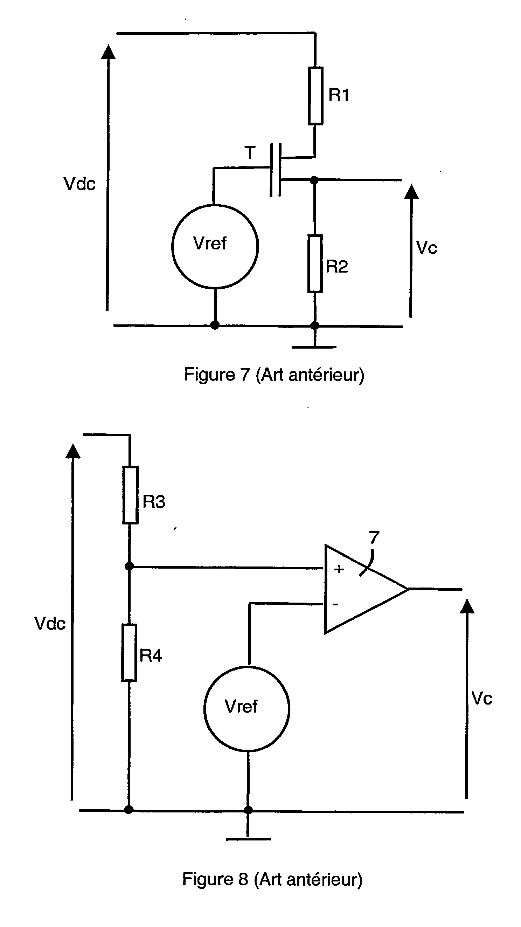

Dans un premier mode de réalisation du régulateur 6, illustré à la figure 7, la tension continue Vdc est appliquée, par l'intermédiaire d'une résistance R1, à la source d'un transistor T, de type PMOS, dont le drain est connecté à la masse par l'intermédiaire d'une résistance R2, tandis qu'une tension de référence Vref est appliquée à la grille du transistor T. Le régulateur fournit ainsi une tension de commande Vc, destinée à contrôler la valeur de l'impédance de charge variable Z. Le transistor de type PMOS peut être remplacé par un transistor bipolaire, de type PNP, ou par un transistor de type JFET.

Dans la variante de réalisation illustrée à la figure 8, le régulateur 6 comporte un pont diviseur, constitué par deux résistances, R3 et R4, connectées en série entre la sortie du circuit redresseur 5 et la masse, et un amplificateur 7, ayant une entrée (positive sur la figure) connectée au point milieu du pont diviseur et une autre entrée (négative sur la figure) connectée à la tension de référence Vref.

L'impédance de charge variable Z peut être constituée par un transistor T, par exemple de type MOSFET, JFET ou bipolaire, dont l'électrode de commande est connectée à la sortie du régulateur 6. La tension Vdc est ainsi régulée à une valeur dépendant de la tension de référence Vref, ce qui régule et limite la tension aux bornes de l'antenne 3. L'impédance variable peut également être constituée par tout autre moyen connu, par exemple par un faisceau de résistances à connecter ou déconnecter sélective ment de l'antenne 3 en fonction de la valeur de la tension continue Vdc.

De nombreuses applications potentielles, par exemple l'identification biométrique, nécessitent le transfert d'une quantité importante d'informations, dans un temps qui doit rester suffisamment faible pour qu'un utilisateur considère que la transmission est quasi-instantanée. Une augmentation de la fréquence du signal binaire de données pourrait permettre d'augmenter le débit binaire. Cependant, une telle augmentation aurait pour conséquence une augmentation de la bande passante nécessaire. Or, une augmentation de la bande passante nécessiterait une réduction du facteur de qualité de l'étiquette, au détriment des performances de la télé-alimentation.

### Objet de l'invention

L'invention a pour but un objet portatif d'un dispositif de télétransmission par couplage inductif permettant d'augmenter le débit des données à transmettre ente la station fixe et l'objet portatif et ne présentant pas ces inconvénients.

Selon l'invention, ce but est atteint par un objet portatif selon les revendications annexées et, plus particulièrement par le fait que, la station fixe émettant un champ magnétique alternatif modulé en amplitude sur 2^{N} niveaux par des données à transmettre, codées sur N bits, l'objet portatif comporte des moyens de démodulation comportant un convertisseur analogique-numérique à n bits, cadencé à une fréquence de sur-échantilonnage très supérieure à la fréquence des données et connecté entre les moyens de redressement et les moyens de commande, et des moyens de traitement numérique connectés à la sortie du convertisseur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre schématiquement un dispositif de télétransmission à couplage inductif selon l'art antérieur.
La figure 2 représente les variations du champ magnétique H, émis par la station fixe, en fonction de la valeur du signal de données binaire à transmettre à l'objet portatif d'un dispositif selon la figure 1.

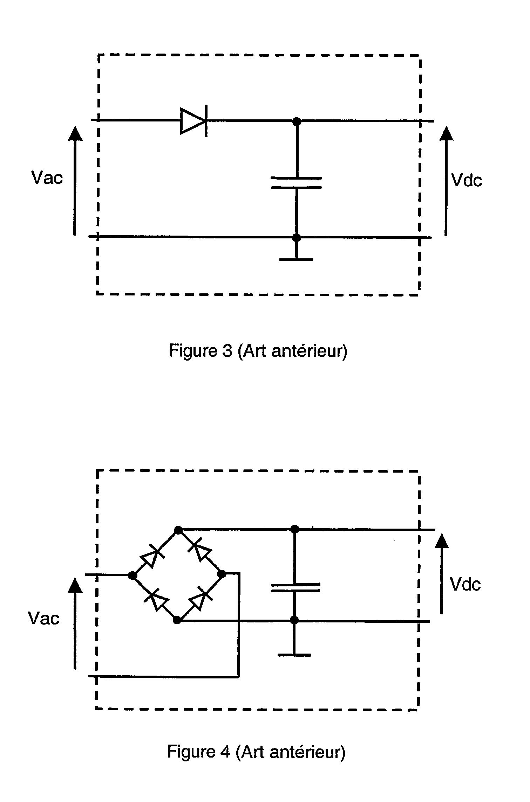

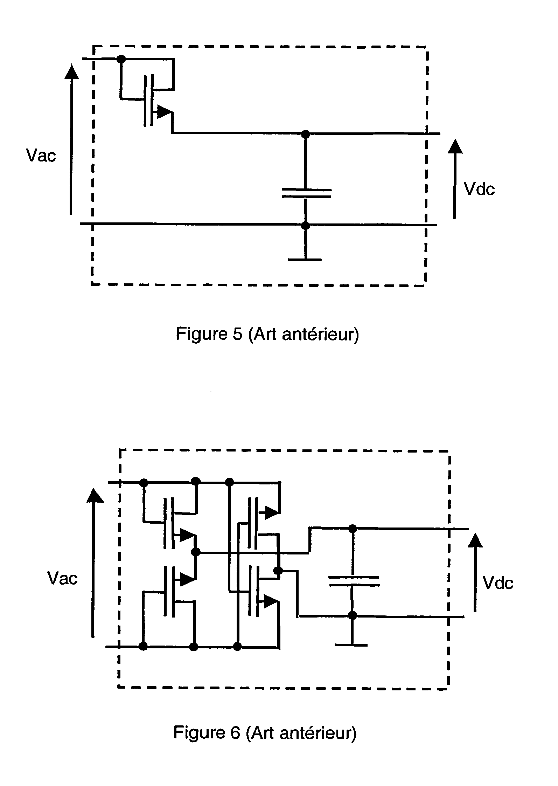

Les figures 3 à 6 représentent diverses variantes de réalisation d'un circuit de redressement d'un dispositif selon l'art antérieur.
Les figures 7 et 8 illustrent deux variantes de réalisation d'un régulateur d'un dispositif selon l'art antérieur.

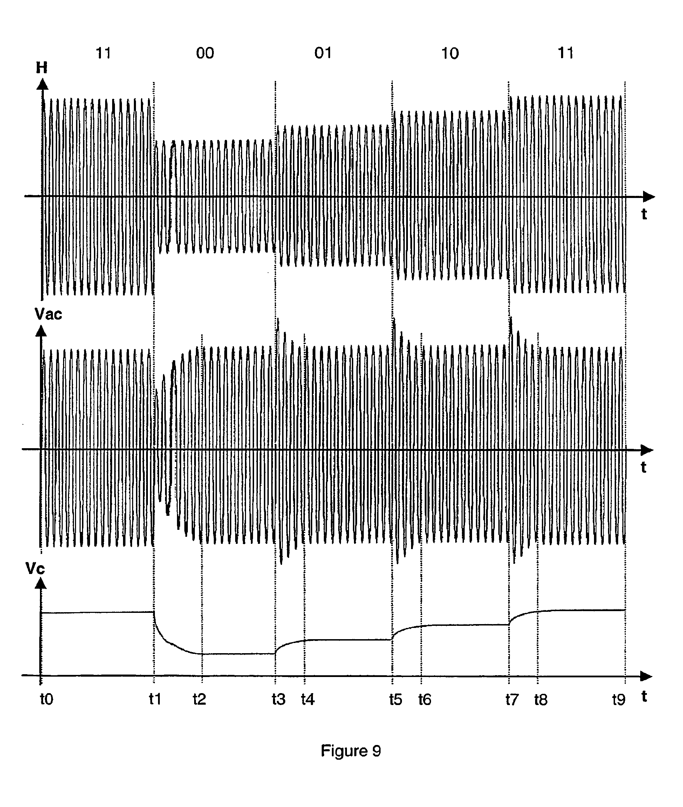

La figure 9 représente différents signaux obtenus dans un dispositif selon la figure 1 utilisant une modulation sur 4 niveaux.

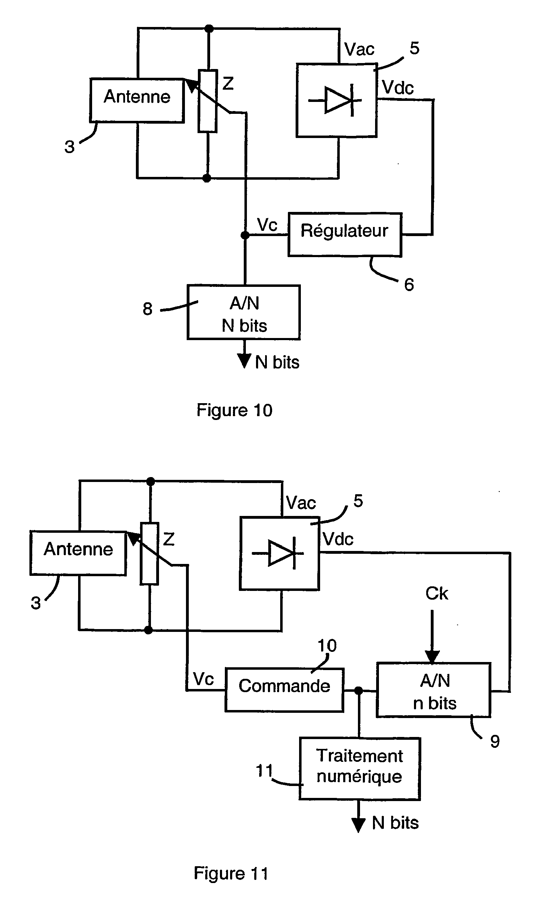

La figure 10 représente un dispositif permettant une démodulation multiniveaux.
La figure 11 représente un dispositif selon l'invention.

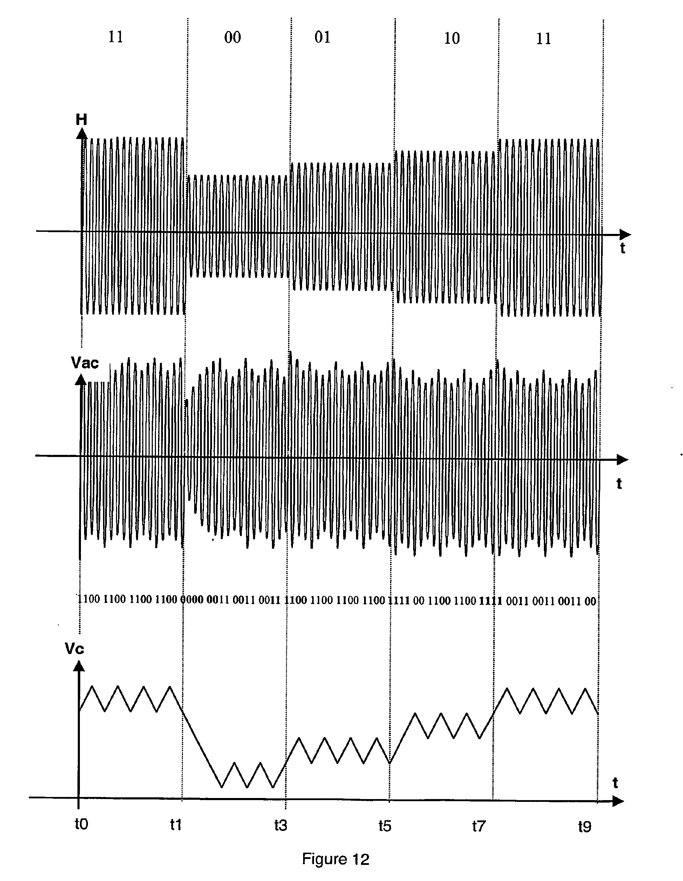

La figure 12 représente différents signaux obtenus dans un dispositif selon la figure 11.

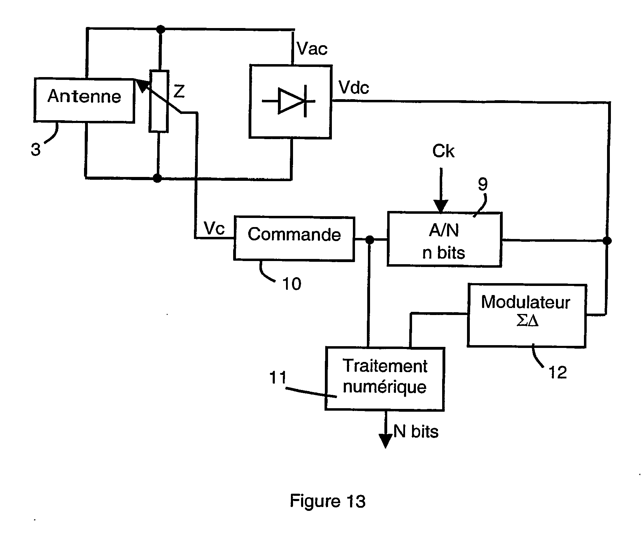

La figure 13 illustre une variante de réalisation d'un dispositif selon l'invention.

### Description de modes particuliers de réalisation.

Le dispositif selon l'invention utilise une modulation multiniveaux. Ainsi, l'amplitude du champ magnétique alternatif H émis par la station fixe 2 est modulé sur 2^{N} niveaux par des données à transmettre, codées sur N bits, avec N ≥ 1. Dans le mode particulier de réalisation représenté à la figure 9, les données sont codées sous la forme de mots de 2 bits (N=2) et l'amplitude du champ magnétique émis peut ainsi prendre 4 valeurs différentes correspondants respectivement aux différentes valeurs (00, 01, 10 et 11) des données à transmettre. Sur la figure 9, le champ émis a une amplitude minimum pour transmettre une donnée 00 (entre les instants t1 et t3), puis prend respectivement des première et seconde valeurs intermédiaires, supérieures, pour transmettre respectivement les données 01 (entre les instants t3 et t5) et 10 (entre les instants t5 et t7), et une valeur maximale pour transmettre la donnée 11 (entre les instants t0 et t1 et entre les instants t7 et t9).

Dans un objet portatif 1 selon la figure 1, comportant une boucle de régulation, le changement de niveau de l'amplitude du champ émis provoque un changement de niveau de la force électromotrice et, en conséquence, une variation rapide (décroissante à l'instant t1 et croissante aux instants t3, t5 et t7) de l'amplitude de la tension alternative Vac générée aux bornes de l'antenne 3 et de l'impédance de charge Z. La boucle de régulation réagit à cette variation en modifiant la tension Vc de commande de l'impédance Z pour ramener l'amplitude de la tension Vac à une valeur régulée prédéterminée après une période transitoire dont la durée (t1-t2, t3-t4, t5-t6 ou t7-t8) dépend de la bande passante de la boucle de régulation.

Avec ce type de boucle de régulation, le niveau et les variations de la tension alternative Vac ne sont pas représentatifs des niveaux du champ magnétique émis, correspondant aux données numériques binaires à transmettre. Ceci est plus particulièrement évident entre les instants t3 et t9, correspondants à des valeurs croissantes du niveau de l'amplitude du champ magnétique émis, pour lesquelles le passage d'un niveau au niveau immédiatement supérieur provoque les mêmes variations de la tension Vac. Cependant, comme représenté à la figure 9, après la période transitoire, l'amplitude de la tension de commande Vc, en sortie du circuit de régulation 6, est proportionnelle à l'amplitude du champ magnétique émis. L'amplitude de la tension de commande Vc est donc représentative du niveau de l'amplitude du champ magnétique émis et, en conséquence, des données à transmettre.

L'objet portatif représenté à la figure 10 utilise la tension de commande Vc pour réaliser une démodulation multiniveaux des données transmises entre la station fixe 2 et l'objet portatif. Cet objet portatif se distingue de l'objet portatif selon la figure 1 par l'addition d'un convertisseur analogique-numérique 8 (A/N) à N bits, dont l'entrée est connectée à la sortie du régulateur 6 et qui fournit en sortie les données démodulées sous forme de mots de N bits. Cependant, les variations de la tension de commande Vc sont faibles, notamment lorsque l'impédance de charge Z variable est constituée par un transistor de type M OS, dont la grille est connectée à la sortie du régulateur 6. En effet, la tension de commande Vc varie alors entre la tension de seuil du transistor et la tension de seuil plus quelques centaines de millivolts. Ceci impose une forte résolution du convertisseur analogique-numérique 8, ce qui peut poser des problèmes au niveau de sa consommation et de la surface de silicium nécessaire.

Pour éviter ces problèmes, il est possible d'utiliser le courant traversant l'impédance de charge Z comme grandeur représentative des données transmises, le convertisseur analogique-numérique 8 étant alors connecté à la sortie d'une interface de mesure du courant. En effet, les variations de ce courant sont nettement plus fortes que celles de la tension de commande Vc. Cependant, si ces fortes variations constituent un avantage lorsque l'objet portatif 1 est situé à une distance prédéterminée de la station fixe 2, cela pose un problème si l'objet portatif doit pouvoir être utilisé dans une large gamme de distances. Une gamme de distances complète peut, par exemple, correspondre typiquement à des courants allant de quelques microampères à quelques dizaines de milliampères. Cette très grande dynamique nécessite une très forte résolution du convertisseur analogique-numérique 8 et/ou l'adjonction d'un système permettant de s'affranchir de la distance entre l'objet portatif 1 et la station fixe 2. Un tel système, comportant notamment des circuits de contrôle automatique de gain et/ou de sélection automatique de gamme, rend le circuit de démodulation de l'objet portatif plus complexe.

L'objet portatif représenté à la figure 11 permet d'éviter ces inconvénients. Pour cela, un convertisseur analogique-numérique 9 (A/N) à n bits est introduit dans la boucle de régulation, entre le circuit de redressement 5 et un circuit de commande 10 fournissant la tension de commande Vc, destinée à contrôler l'impédance de charge Z. Dans un mode de réalisation préférentiel, N ≥ 2 et n<N. Le convertisseur analogique-numérique 9 est, de préférence, un convertisseur à un bit (n=1), qui peut ainsi être constitué par un simple comparateur. Cette très faible résolution, qui permet de réduire au minimum le nombre de composants, est compensée par une forte résolution dans le temps, obtenue en cadençant le convertisseur 9 à une fréquence de sur-échantillonnage très supérieure à la fréquence des données transmises par la station fixe. La fréquence de sur-échantillonnage est déterminée par un circuit d'horloge fournissant des signaux d'horloge Ck à une entrée de cadencement du convertisseur 9. À titre d'exemple, pour une fréquence de données de l'ordre de 200kHz, la fréquence de sur-échantillonnage peut avantageusement être comprise entre 10 et 20MHz. Bien que les signaux numériques de sortie du convertisseur 9 contiennent les informations nécessaires à la récupération des données transmises par la station fixe 2, ces signaux numériques ne sont pas directement exploitables. La sortie du convertisseur 9, connectée au circuit de commande 10, est donc, de plus, connectée à l'entrée d'un circuit de traitement numérique 11 destiné à fournir, sur N bits, les données démodulées.

Le fonctionnement du circuit de démodulation de l'objet portatif de la figure 11, est illustré par les signaux représenté à la figure 12, dans le cas où le convertisseur analogique-numérique 9, basse résolution, inclus dans la boucle de régulation de la tension alternative Vac aux bornes de l'antenne 3, est constitué par un simple comparateur (n=1) fournissant une suite de bits à la fréquence de sur-échantillonnage. Le circuit de commande 1 0 est constitué par un intégrateur fournissant un signal de tension analogique Vc représentatif des signaux de sortie à n bits du convertisseur, par exemple sous la forme d'une rampe de tension montante lorsque la sortie du convertisseur 9 est à 1 et d'une rampe de tension descendante lorsque cette sortie est à zéro. La tension de commande Vc, obtenue en sortie du circuit de commande 10, n'est donc jamais statique. Ainsi, après une période transitoire, lorsque la boucle de régulation est en position d'équilibre, la tension de commande Vc a la forme d'un signal en dents-de-scie autour d'un niveau moyen proportionnel au niveau de la force électromotrice, c'est-à-dire proportionnel au niveau du champ magnétique émis par la station fixe 2 et, en conséquence, représentatif des données transmises par la station fixe.

Dans l'exemple illustré à la figure 12, le champ magnétique H varie entre les instants t0 et t9 de la même manière que sur la figure 9. Le changement de niveau de l'amplitude du champ magnétique H émis provoque un changement de niveau de la force électromotrice et, en conséquence, une variation rapide (décroissante à l'instant t1 et croissante aux instants t3, t5 et t7) de la tension alternative Vac générée aux bornes de l'anten ne 3 et de l'impédance de charge Z. La sortie numérique du convertisseur 9, qui compare l'amplitude de la tension redressée à un seuil prédéterminé, est alors constituée par une suite de bits à la fréquence de sur-échantillonnage et, plus particulièrement, par une alternance de paires de 0 et de paires de 1 : 1100110011 001100 entre les instants t0 et t1, 0000001100110011 entre les instants t1 et t3, 1100110011001100 entre les instants t3 et t5, 1111001100110011 entre les instants t5 et t7 et 1100110011001100 entre les instants t5 et t7. Une diminution du niveau du champ magnétique émis se traduit donc (par exemple à l'instant t1) par l'émission de plus de deux 0 consécutifs, provoquant ainsi une diminution de l'amplitude moyenne de la tension de commande Vc. De manière analogue, une augmentation du niveau du champ magnétique émis se traduit (par exemple aux instants t3, t5 et t7) par l'émission de plus de deux 1 consécutifs, provoquant une augmentation de l'amplitude moyenne de la tension de commande Vc. Le nombre de 0 ou de 1 consécutifs croît avec l'amplitude du saut de la force électromotrice. Les signaux numériques de sortie du convertisseur 9 contiennent ainsi une information représentative du signe et de l'amplitude de la variation du niveau de la force électromotrice générée par le champ magnétique émis, autrement dit une information représentative de la dérivée de l'enveloppe de la force électromotrice ou du champ magnétique. Le circuit de traitement numérique 11, destiné à transformer cette information en signaux numériques binaires représentatifs des données transmises, comporte donc au moins une fonction d'intégration numérique. Les fonctions d'intégration du circuit de commande 10 et/ou du circuit de traitement numérique 11 peuvent être réalisées au moyen d'intégrateurs et/ou de filtres passe-bas.

Ainsi, dans le mode de réalisation de la figure 11, la boucle de régulation assure simultanément une partie de la conversion analogique-numérique, ce qui rend l'ensemble plus compact. De plus l'effet de variations lentes éventuelles du niveau de champ magnétique moyen, dues à un mouvement de l'objet portatif 1, est atténué par le fait que l'information de sortie du convertisseur 9 est représentative de la dérivée de l'enveloppe du champ magnétique. Les variations lentes du niveau de champ moyen sont donc traitées comme du bruit et ne perturbent pas la démodulation. Le report d'une partie du traitement en numérique dans le circuit de traitement numérique est également avantageux.

Par contre, l'impédance de charge Z est modulée en permanence, même à champ constant, et cela peut perturber la communication en sens inverse, entre l'objet portatif et la station fixe. Cet inconvénient peut néanmoins être écarté par une inhibition de la boucle de régulation pendant l'émission de données modulées par l'objet portatif.

Pour s'affranchir davantage des variations de champ moyen, il est possible d'adapter certaines caractéristiques du circuit de commande 10, par exemple la pente des rampes de la tension de commande Vc, au champ magnétique moyen par l'intermédiaire d'une boucle de bande passante nettement plus étroite que celle de la boucle de régulation principale.

La variante de la figure 13 permet d'augmenter la résolution de la démodulation en diminuant l'influence du bruit de quantification généré par le convertisseur analogique-numérique 9 à faible résolution. Pour cela, un modulateur 12, de type sigma-delta, est connecté entre l'entrée du convertisseur analogique-numérique 9 et une entrée additionnelle du circuit de traitement numérique 11. L'entrée du convertisseur 9 (tension redressée Vdc) est ainsi convertie, par le modulateur 12, en un signal binaire sur-échantillonné et ce signal binaire sur-échantillonné est combiné avec la sortie du convertisseur 9 dans le circuit de traitement numérique pour fournir les données démodulées sous forme de mots de N bits.

## Revendications

1. Dispositif de télétransmission comportant une station fixe (2) et un objet portatif muni d'une antenne (3) couplée inductivement à la station fixe, l'objet portatif (1) comportant une impédance de charge (Z) variable, connectée aux bornes de l'antenne (3), et une boucle de régulation de la tension (Vac) aux bornes de l'impédance de charge (Z) comportant des moyens (5) de redressement de la tension (Vac) aux bornes de l'antenne et des moyens de commande (10) destinés à modifier l'impédance de charge (Z) en fonction de la tension (Vdc) de sortie des moyens (5) de redressement, objet **caractérisé en ce que**, la station fixe (2) émettant un champ magnétique alternatif (H) modulé en amplitude sur 2^{N} niveaux par des données à transmettre, codées sur N bits, l'objet portatif (1) comporte des moyens de démodulation comportant un convertisseur analogique-numérique (9) à n bits, cadencé à une fréquence de sur-échantilonnage (Ck) très supérieure à la fréquence des données et connecté entre les moyens de redressement (5) et les moyens de commande (10), et des moyens de traitement numérique (11) connectés à la sortie du convertisseur (9).

2. Dispositif selon la revendication 1, **caractérisé en ce que** les valeurs respectives de N et de n sont telles que N ≥ 2 et n<N.

3. Dispositif selon l'une des revendications 1 et 2, **caractérisé en ce que** les moyens de traitement numérique (11) comportent des moyens d'intégration numérique, fournissant des signaux de N bits, représentatifs des données transmises.

4. Dispositif selon l'une quelconque des revendications 1 à 3, **caractérisé en ce que** les moyens de commande (10) comportent des moyens d'intégration fournissant un signal de tension analogique (Vc) représentatif des signaux de sortie à n bits du convertisseur.

5. Dispositif selon la revendication 4, **caractérisé en ce que** les moyens d'intégration comportent un filtre passe-bas.

6. Dispositif selon l'une quelconque des revendications 1 à 5, **caractérisé en ce que** n = 1.

7. Dispositif selon la revendication 6, **caractérisé en ce que** le convertisseur (9) est constitué par un comparateur.

8. Dispositif selon l'une quelconque des revendications 1 à 7, **caractérisé en ce que** N = 2

9. Dispositif selon l'une quelconque des revendications 1 à 8, **caractérisé en ce que** l'impédance variable (Z) comporte un transistor de type MOS

10. Dispositif selon l'une quelconque des revendications 1 à 9, **caractérisé en ce qu'**il comporte un modulateur (12), de type sigma-delta, connecté entre l'entrée du convertisseur analogique-numérique (9) et une entrée additionnelle des moyens de traitement numérique (11).

## Claims

1. Remote transmission device comprising a fixed station (2) and a portable object provided with an antenna (3) inductively coupled to the fixed station, the portable object (1) comprising a variable load impedance (Z), connected to terminals of the antenna (3), and a regulation loop regulating the voltage (Vac) at terminals of the load impedance (Z) comprising rectifier means (5) for rectifying the voltage (Vac) at the terminals of the antenna and control means (10) designed to modify the load impedance (Z) according to the output voltage (Vdc) of the rectifier means (5), object **characterized in that**, the fixed station (2) emitting an alternating magnetic field (H) modulated in amplitude on 2^{N} levels by data to be transmitted, encoded on N bits, the portable object (1) comprises demodulation means comprising an n-bit analog-to-digital converter (9), clocked at an oversampling frequency (Ck) much higher than the frequency of the data and connected between the rectifier means (5) and the control means (10), and digital processing means (11) connected to the output of the converter (9).

2. Device according to claim 1, **characterized in that** the respective values of N and n are such that N ≥ 2 and n<N.

3. Device according to one of claims 1 and 2, **characterized in that** the digital processing means (11) comprise digital integration means supplying N-bit signals representative of the transmitted data.

4. Device according to any one of claims 1 to 3, **characterized in that** the control means (10) comprise integration means supplying an analog voltage signal (Vc) representative of the n-bit output signals of the converter.

5. Device according to claim 4, **characterized in that** the integration means comprise a low-pass filter.

6. Device according to any one of claims 1 to 5, **characterized in that** n = 1.

7. Device according to claim 6, **characterized in that** the converter (9) is formed by a comparator.

8. Device according to any one of claims 1 to 7, **characterized in that** N = 2.

9. Device according to any one of claims 1 to 8, **characterized in that** the variable impedance (Z) comprises a MOS type transistor.

10. Device according to any one of claims 1 to 9, **characterized in that** it comprises a sigma-delta type modulator (12), connected between the input of the analog-to-digital converter (9) and an additional input of the digital processing means (11).

## Patentansprüche

1. Vorrichtung zur Fernübertragung, die eine Feststation (2) und ein tragbares Element umfasst, das eine Antenne (3) aufweist, die induktiv an die Feststation gekoppelt ist, wobei das tragbare Element (1) eine variable Lastimpedanz (Z) umfasst, die an die Klemmen der Antenne (3) gelegt ist, sowie eine Spannungsregelschleife (Vac) an den Klemmen der Lastimpedanz (Z), die Mittel (5) zur Gleichrichtung der Spannung (Vac) an den Klemmen der Antenne und Steuerungsmittel (10) umfasst, die vorgesehen sind, die Lastimpedanz (Z) abhängig von der Ausgangsspannung (Vdc) der Gleichrichtungsmittel (5) zu verändern, Element, das **dadurch gekennzeichnet ist, dass** die Feststation (2) ein alternatives Magnetfeld (H) aussendet, das auf 2^{N} Ebenen amplitudenmoduliert ist, und zwar durch zu übermittelnde Daten, die auf N Bit kodiert sind, und dass das tragbare Element (1) Demodulationsmittel umfasst, die einen n Bit-Analog-Digital-Umsetzer (9) umfassen, der auf eine Überabtastungsfrequenz (Ck) getaktet sind, die weit über der Frequenz der Daten liegt und zwischen die Gleichrichtungsmittel (5) und die Steuerungsmittel (10) geschaltet sind, sowie digitale Verarbeitungsmittel (11), die an den Ausgang des Wandlers (9) gelegt sind.

2. Vorrichtung nach Anspruch 1, **dadurch gekennzeichnet, dass** die jeweiligen Werte von N und n so vorgesehen sind, dass N ≥ 2 und n < N.

3. Vorrichtung nach einem der Ansprüche 1 und 2, **dadurch gekennzeichnet, dass** die digitale Verarbeitungsmittel (11) digitale Integrationsmittel umfassen, welche Signale mit N Bit liefern, die für die übermittelten Daten stehen.

4. Vorrichtung nach einem der Ansprüche 1 bis 3, **dadurch gekennzeichnet, dass** die Steuerungsmittel (10) Integrationsmittel umfassen, die ein analoges Spannungssignal (Vc) liefern, das für die n Bit-Ausgangssignale des Wandlers steht.

5. Vorrichtung nach Anspruch 4, **dadurch gekennzeichnet, dass** die Integrationsmittel einen Tiefpassfilter umfassen.

6. Vorrichtung nach einem der Ansprüche 1 bis 5, **dadurch gekennzeichnet, dass** n = 1.

7. Vorrichtung nach Anspruch 6, **dadurch gekennzeichnet, dass** der Wandler (9) ein Komparator ist.

8. Vorrichtung nach einem der Ansprüche 1 bis 7, **dadurch gekennzeichnet, dass** N = 2.

9. Vorrichtung nach einem der Ansprüche 1 bis 8, **dadurch gekennzeichnet, dass** die variable Impedanz (Z) einen MOS-Transistor umfasst.

10. Vorrichtung nach einem der Ansprüche 1 bis 9, **dadurch gekennzeichnet, dass** sie einen Sigma-Delta-Modulator (12) umfasst, der zwischen den Eingang des Analog-Digital-Umsetzers (9) und einen zusätzlichen Eingang der digitale Verarbeitungsmittel (11) geschaltet ist.
